# EUROPEAN PATENT SPECIFICATION

(11) **EP 3 633 870 B1**
(45) Date of publication and mention of the grant of the patent: **08.12.2021**
(21) Application number: 18198305.7
(22) Date of filing: 02.10.2018
(51) Int. Cl.: H04B 7/0452

(54) **NETWORK NODE AND METHOD IN A WIRELESS COMMUNICATIONS NETWORK**
NETZWERKKNOTEN UND VERFAHREN IN EINEM DRAHTLOSKOMMUNIKATIONSNETZWERK
NOEUD DE RÉSEAU ET PROCÉDÉ DANS UN RÉSEAU DE COMMUNICATIONS SANS FIL

(43) Date of publication of application: 08.04.2020
(73) Proprietor: Telefonaktiebolaget LM Ericsson (publ), 164 83 Stockholm (SE)
(72) Inventor: HURD, Magnus, SE-118 67 STOCKHOLM (SE); KARLSSON, Jonas, SE-194 68 UPPLANDS VÄSBY (SE); HOGAN, Billy, SE-191 33 SOLLENTUNA (SE)
(74) Representative: Ericsson

(56) References cited:
- EP-A1- 2 741 369
- US-A1- 2005 225 498

## Description

### TECHNICAL FIELD

Embodiments herein relate to a method and a network node. In some aspects, they relate to allocating antenna elements of an antenna array.

### BACKGROUND

In a typical wireless communication network, wireless devices, also known as wireless communication devices, mobile stations, stations (STA) and/or User Equipments (UE), communicate via a Local Area Network such as a WiFi network or a Radio Access Network (RAN) to one or more core networks (CN). The RAN covers a geographical area which is divided into service areas or cell areas, which may also be referred to as a beam or a beam group, with each service area or cell area being served by a radio network node such as a radio access node e.g., a Wi-Fi access point or a radio base station (RBS), which in some networks may also be denoted, for example, a NodeB, eNodeB (eNB), or gNB as denoted in 5G. A service area or cell area is a geographical area where radio coverage is provided by the radio network node. The radio network node communicates over an air interface operating on radio frequencies with the wireless device within range of the radio network node.

Specifications for the Evolved Packet System (EPS), also called a Fourth Generation (4G) network, have been completed within the 3rd Generation Partnership Project (3GPP) and this work continues in the coming 3GPP releases, for example to specify a Fifth Generation (5G) network also referred to as 5G New Radio (NR). The EPS comprises the Evolved Universal Terrestrial Radio Access Network (E-UTRAN), also known as the Long Term Evolution (LTE) radio access network, and the Evolved Packet Core (EPC), also known as System Architecture Evolution (SAE) core network. E-UTRAN/LTE is a variant of a 3GPP radio access network wherein the radio network nodes are directly connected to the EPC core network rather than to RNCs used in 3G networks. In general, in E-UTRAN/LTE the functions of a 3G RNC are distributed between the radio network nodes, e.g. eNodeBs in LTE, and the core network. As such, the RAN of an EPS has an essentially "flat" architecture comprising radio network nodes connected directly to one or more core networks, i.e. they are not connected to RNCs. To compensate for that, the E-UTRAN specification defines a direct interface between the radio network nodes, this interface being denoted the X2 interface.

Multi-antenna techniques can significantly increase the data rates and reliability of a wireless communication system. The performance is in particular improved if both the transmitter and the receiver are equipped with multiple antennas, which results in a Multiple-Input Multiple-Output (MIMO) communication channel. Such systems and/or related techniques are commonly referred to as MIMO.

In addition to faster peak Internet connection speeds, 5G planning aims at higher capacity than current 4G, allowing higher number of mobile broadband users per area unit, and allowing consumption of higher or unlimited data quantities in gigabyte per month and user. This would make it feasible for a large portion of the population to stream high-definition media many hours per day with their mobile devices, when out of reach of Wi-Fi hotspots. 5G research and development also aims at improved support of machine to machine communication, also known as the Internet of things, aiming at lower cost, lower battery consumption and lower latency than 4G equipment.

An antenna array also referred to as an array antenna, is a set of multiple connected antennas to transmit or receive radio waves. The individual antennas in the set of multiple connected antennas are referred to as antenna elements.

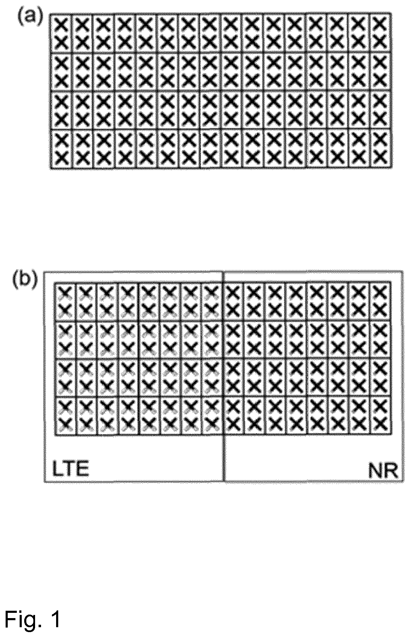

Large antenna arrays such as Advanced antenna System (AAS) antenna arrays comprise many antenna elements. **Figure 1(a)** depicts a massive antenna array with 128 cross polarized antenna elements where each cross-polarized antenna element corresponds to two antenna elements. These antenna elements support one Radio Access Technology (RAT) like LTE or NR at a time. Patent publication document EP 2741369 A1 describes a multi-mode (CDMA/LTE) antenna design method where a total number of antenna radiation elements required by the CDMA antenna and the upper and lower LTE MIMO antennas, is determined based on a required antenna gain for the CDMA and LTE systems respectively. Patent publication document US 2005225498 A1 relates to another similar multi-mode (GSM/UMTS) antenna design method.

### SUMMARY

An object of embodiments herein is to provide a way of allocating antenna elements in an antenna array for wireless communication to improve the performance in a wireless communications network supporting multiple RATs.

The invention is set forth in the appended independent claims. Optional embodiments are described in the dependent claims.

Since, the sizes of the allocated sections of the first and second RATs are decided based on the radio coverage requirement and the traffic load of the different RATs, a good trade-off between cell-shaping to achieve good coverage and diversity to be able to serve many UEs is provided, improving the performance in the wireless communications network supporting multiple RATs.

### BRIEF DESCRIPTION OF THE FIGURES

- Figure 1(a): is a schematic diagram illustrating an antenna array of prior art.
- Figure 1(b): is a schematic diagram illustrating an antenna array of prior art.
- Figure 2: is a schematic block diagram illustrating embodiments of a wireless communications network.
- Figure 3: is a flowchart depicting embodiments of a method.
- Figure 4: is a schematic diagram illustrating embodiments of an antenna array.
- Figure 5: is a schematic diagram illustrating embodiments of an antenna array.
- Figure 6: is a schematic diagram illustrating embodiments of an antenna array.
- Figure 7: is a schematic diagram illustrating embodiments of an antenna array.
- Figure 8a: is a schematic diagram illustrating embodiments of an antenna array.
- Figure 8b: is a schematic diagram illustrating embodiments of an antenna array.
- Figure 9a: is a schematic block diagram illustrating embodiments of a network node.
- Figure 9b: is a schematic block diagram illustrating embodiments of a network node.
- Figure 10: schematically illustrates a telecommunication network connected via an intermediate network to a host computer.
- Figure 11: is a generalized block diagram of a host computer communicating via a base station with a user equipment over a partially wireless connection.
- Figures 12-15: are flowcharts illustrating methods implemented in a communication system including a host computer, a base station and a user equipment.

### DETAILED DESCRIPTION

As part of developing embodiments herein, a problem was identified by the inventors, and will first be discussed.

As mentioned above, large antenna arrays comprise many antenna elements. These antenna elements support one RAT like LTE or NR at a time. It is also possible to have a combination of different RATs supported on an antenna array simultaneously in a so-called split mode configuration.

**Figure 1(b)** depicts an allocation of antenna elements to specific RATs in a split mode configuration, in this case LTE and NR according to prior art. Today the allocation of antenna elements to specific RATs is performed by splitting the antenna array into two halves e.g. deploying NR and LTE. In Figure 1(b) one half part of the antenna elements is for LTE and the other half part is for NR. A problem is that this fails to exploit the full geometrical potential of the antenna array. It also fails to consider coverage as well as the amount of load to be served by each technology.

Embodiments herein provide an improved exploiting of the AAS antenna array for deploying multiple RATs simultaneously.

Some example embodiments herein relate to methods for multi-RAT standard deployment of antenna elements of an antenna array, e.g. comprised in an AAS. These embodiments provide interleaved assignment of antenna elements in sections of different RATs in a split mode deployment. The sizes of the allocated sections of the different RATs are decided based on the radio coverage requirement and the traffic load of the different RATs which e.g. results in a good trade-off between cell-shaping to achieve good coverage and diversity to be able to serve many UEs.

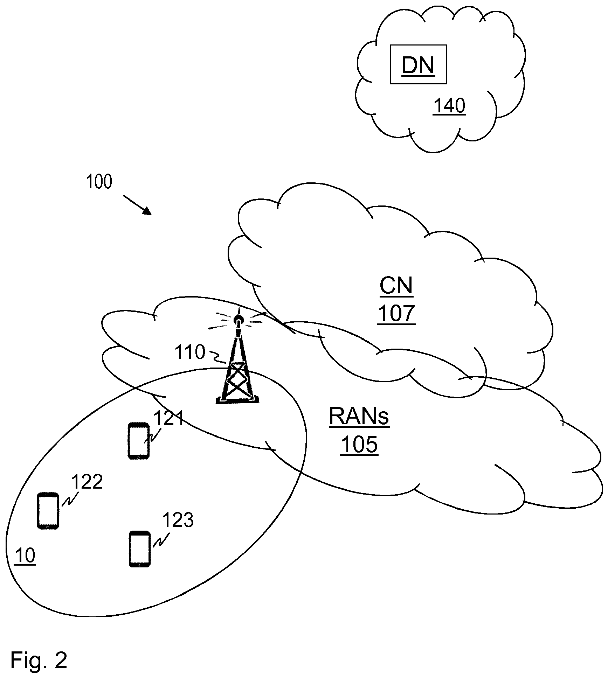

**Figure 2** is a schematic overview depicting a wireless communications network 100 wherein embodiments herein may be implemented. The wireless communications network 100 comprises one or more **RANs 105** and one or more **CNs 107.** The wireless communications network 100 supports a number of Radio Access Technologies (RATs) such as a first RAT, a second RAT and one or more third RATs. The different RATs may e.g. comprises 5G NR, Wi-Fi, LTE, LTE-Advanced, Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB), just to mention a few possible implementations.

Network nodes such as a **network node 110** operate in the wireless communications network 100.

The network node 110 or any other node in the wireless communications network 100 provides radio coverage over a geographical area or a **cell 10.**

The radio coverage is provided to UEs by means of an antenna arrays. The antenna arrays may be comprised in the network node 110 or in any other node in the wireless communications network 100. The network node 110 may be a distributed base station using remote radio heads and a centralized base band part. In that case antenna arrays are comprised in the remote radio heads.

The network node 110 may be a transmission and reception point e.g. a radio access network node such as a base station, e.g. a radio base station such as a NodeB, an evolved Node B (eNB, eNode B), an NR Node B (gNB), a base transceiver station, a radio remote unit, an Access Point Base Station, a base station router, a transmission arrangement of a radio base station, a stand-alone access point, a Wireless Local Area Network (WLAN) access point, an Access Point Station (AP STA), an access controller, a UE acting as an access point or a peer in a Device to Device (D2D) communication, or any other network unit capable of communicating with a UE within the cell 11 served by network node 110 depending e.g. on the radio access technology and terminology used.

A number of UEs operate and/or have been operating in the wireless communications network 100, such as one or more **first UEs 121** using the first RAT, one or more **second UEs 122** using the second RAT, and in some embodiments one or more **third UEs 123** using the third RAT.

The respective first, second and third UEs 121, 122, 123 may e.g. be an NR device, a mobile station, a wireless terminal, an NB-loT device, an eMTC device, a CAT-M device, a WiFi device, an LTE device and an a non-access point (non-AP) STA, a STA, that communicates via a base station such as e.g. the network node 110, one or more Access Networks (AN), e.g. RAN, to one or more CN. It should be understood by the skilled in the art that the UE relates to a non-limiting term which means any UE, terminal, wireless communication terminal, user equipment, (D2D) terminal, or node e.g. smart phone, laptop, mobile phone, sensor, relay, mobile tablets or even a small base station communicating within a cell.

The methods according to embodiments herein are performed by the network node 110. As an alternative, the network node 110 may be a Distributed Node (DN) and functionality, e.g. comprised in a **cloud 140** as shown in Figure 2 may be used for performing or partly performing the methods.

According to example embodiments herein at least two RATs, the first RAT and the second RAT e.g. LTE and NR are assigned to antenna elements of an antenna array based on sections. Sections of antenna elements belonging to one RAT such as the first RAT are interleaved by sections belonging to another RAT such as the second RAT. Moreover, the number of antenna elements assigned to one technology depends on any one or more out of coverage requirements and traffic scenario.

Embodiments herein provide advantages such as increased diversity for a RAT in split mode deployment. Optimal distribution of antenna elements between RATs in split mode deployment depending on any one or more out of coverage requirements and traffic scenarios. The embodiments e.g. apply to hardware where there are limitations in allocating different technologies to the same antenna element.

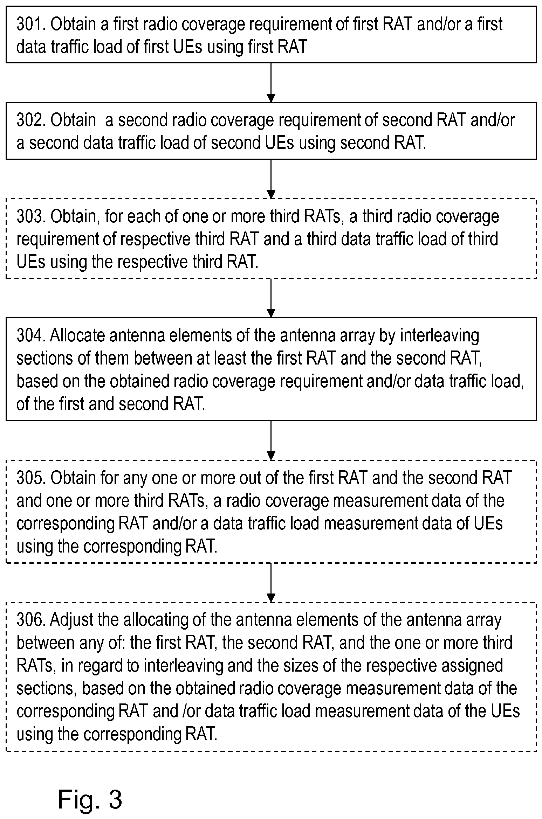

Example embodiments of a flowchart depicting embodiments of a method which may be performed by the network node 110, for allocating antenna elements of an antenna array, are depicted in **Figure 3** and will be described more in detail in the following. As mentioned above the antenna array provides radio coverage for UEs, 121,122, 123, operating in a wireless communications network 100. The antenna array supports multiple RATs. The multiple RATs comprise at least a first RAT and a second RAT. In some embodiments, the method is performed by the network node 110 operating in the wireless communications network 100, which network node 110 may comprise the antenna array.

The method may comprise one or more of the following actions which actions may be taken in any suitable order.

A large antenna array such as an AAS antenna array represents at least two aspects worthwhile to consider, **cell-shaping** to achieve good coverage and **diversity** to be able to serve many UEs.

**Cell shaping** when used herein means a distribution of power at one point in time provided by a base station such as the network node 110, in the area intended to be covered. The distribution of power may for instance be focused towards a certain direction or it may be broad to allow UEs in any direction to have a service.

**Diversity** when used herein means the aspect of making different branches of transmissions statistically independent. Statistical independence would make a message conveyed over several such branches more likely to be successfully decoded. Increasing the success rate of decoding would also increase the potential to serve high traffic load.

These two aspects are counter-acting each other. Cell-shaping results from having different antenna elements contribute coherently to form a signal. To achieve this, the antenna elements should be close enough to each other. Achieving a flexible cell-shaping also relies on having a large enough number of antenna elements close to each other. Diversity results from transmissions statistically independent from each other; to achieve a good contribution from diversity, the different antenna elements should be far enough from each other. Therefore a trade-off between these two counter-acting aspects is required when allocating the antenna elements of the antenna array between at least the first RAT and the second RAT to benefit from the full geometry of the antenna array.

Embodiments herein provide an interleaved assignment of antenna elements to different RATs. This will be explained more in detail and exemplified below. This means antenna elements assigned to one RAT are organized into different sections interleaved by sections assigned to another RAT. According to embodiments herein, different sections are separated at a distance which would represent increased level of diversity. The sections should not be too narrow, e.g. not too few columns in a section, since then cell shaping may suffer which lead to less flexibility.

To be able to allocate the antenna elements of the antenna array between at least the first RAT and the second RAT in an optimal way according to embodiments herein, **radio coverage requirements** related to the cell shaping and **traffic load** related to the diversity of the different RATs will be taken into consideration. The network node 110 thus needs to find out the radio coverage requirements and traffic load for the different RATs.

Radio coverage requirement of a RAT when used herein means a geographic area where a UE such as the UE 120 may maintain a desired service.

Data traffic load of UEs using a RAT when used herein means the number of bits e.g. bits being part of messages, per second transferred between a base station such as e.g. the network node 110 and the user such as the UE 120. The data traffic load may also be referred to as data traffic volume and data traffic capacity.

### Action 301.

Any one or more out of a first radio coverage requirement of the first RAT and a first data traffic load of first UEs 121 using the first RAT are obtained e.g. by the network node 110. This means that in some embodiments, both the first radio coverage requirement of the first RAT and the first data traffic load of first UEs 121 using the first RAT are obtained. In some other embodiments, only the first radio coverage requirement of the first RAT is obtained. In some other embodiments, only the first data traffic load of first UEs 121 using the first RAT is obtained.

The radio coverage requirement for a RAT may e.g. be derived from number of retransmission which may be performed by the network node 110. Regarding downlink transmissions, the network node 110 may receive feedback from the UE 120 regarding any failure of decoding a message, and therefore triggering the need for retransmission. On the uplink the network node 110 may schedule a retransmission from the UE 120 in case the network node 110 failed to decode the transmission.

The radio coverage requirement for a RAT may further be derived from bit/block error rate, or Signal to Noice Ratio (SNR) from different UEs using the specific technology.

Data traffic load of UEs using the specific RAT may be derived from a fraction of frequency and/or time resources that are allocated to traffic, the number of users using the specific RAT, etc.

### Action 302.

Any one or more out of a second radio coverage requirement of the second RAT and a second data traffic load of the second UEs 122 using the second RAT are obtained e.g. by the network node 110. This means in a similar way, that in some embodiments, both the second radio coverage requirement of the second RAT and the second data traffic load of second UEs 122 using the second RAT are obtained. In some other embodiments, only the second radio coverage requirement of the second RAT is obtained. In some other embodiments, only the second data traffic load of second UEs 122 using the second RAT is obtained.

The radio coverage requirement of the RAT and the data traffic load of UEs using the RAT are obtained may be obtained in the same manner as described under Action 301.

### Action 303.

In some embodiments, the multiple RATs further comprise one or more third RATs. In these embodiments, for each one out of the one or more third RATs, any one or more out of: a third radio coverage requirement of the respective third RAT and a third data traffic load of third UEs 123 using the respective third RAT are obtained, e.g. by the network node 110. This means that in some embodiments, both a third radio coverage requirement of the respective third RAT and a third data traffic load of third UEs 123 using the respective third RAT are obtained. In some embodiments, only third radio coverage requirement of the respective third RAT is obtained. In some other embodiments, only third data traffic load of third UEs 123 using the respective third RAT are obtained.

The radio coverage requirement of the RAT and the data traffic load of UEs using the RAT are obtained may be obtained in the same manner as described under Action 301.

### Action 304.

The antenna elements of the antenna array are then allocated between at least the first RAT and the second RAT. This means that some of the antenna elements of the antenna array are allocated to the first RAT and some of the antenna elements of the antenna array are allocated to the second RAT.

This is performed by assigning for the first RAT a number of first sections of antenna elements, and assigning for the second RAT a number of second sections of antenna elements. Assigning sections of antenna elements means to connect the antenna elements of one particular section to a radio chain supporting one particular RAT.

The assigning is performed by interleaving the one or more first section/s of antenna elements assigned for the first RAT with the second sections of antenna elements assigned for the second RAT. Interleaving sections when used herein means to combine different RAT associated antenna elements so that sections of antenna elements of one RAT are put between sections of antenna elements of another RAT.

The first sizes of the assigned first sections and second sizes of the assigned second sections are based on the obtained any one or more out of first radio coverage requirement and the first data traffic load, and the obtained any one or more out of second radio coverage requirement and the second data traffic load. According to a specific example, when the first radio coverage requirement is large and the second radio coverage requirement is a factor smaller than the first radio coverage requirement, assigning the sizes such that a size of the second section that is the factor smaller than the assigned size of the first section.

Examples of sizes of different RAT sections will be described below.

In some embodiments, the first sizes of the assigned first sections and second sizes of the assigned second sections are weighted based on the obtained first radio coverage requirement and the first data traffic load, and the obtained second radio coverage requirement and the second data traffic load. An example of this is the one just described above.

In the embodiments, wherein the multiple RATs further comprise one or more third RATs, this action is performed in the following way: One or more third RATs when used herein means that they may comprise more than one different RATs such as e.g. a third RAT, a fourth RAT a sixth RAT etc..

The allocating of the antenna elements of the antenna array between at least the first RAT and the second RAT, is performed by allocating the antenna elements of the antenna array between the first RAT, the second RAT, and the one or more third RATs, by further assigning for each of the one or more third RATs, a respective number of third sections of antenna elements.

The assigning is performed by interleaving the first sections of antenna elements assigned for the first RAT, the second sections of antenna elements assigned for the second RAT, and the respective one or more third sections of antenna elements assigned for the respective one or more third RAT.

The first sizes of the assigned first sections, the second sizes of the assigned second sections, and the third sizes of the respective assigned one or more third sections are based on the following, e.g. balanced based on the following: The obtained any one or more out of first radio coverage requirement and the first data traffic load, the obtained any one or more out of second radio coverage requirement and the second data traffic load, and each obtained any one or more out of third radio coverage requirement and the third data traffic load.

In some embodiments, any one or more out of: All the first sizes of the respective assigned first sections are the same, all the second sizes of the respective assigned second sections are the same, and for a specific third RAT out of the one or more third RATs, all the third sizes of any one of the assigned third sections are the same.

The interleaving of the first sections of antenna elements assigned for the first RAT with the second sections of antenna elements assigned for the second RAT may e.g. be performed in any dimension and in a series by any one out of:
- In strict order assigning one first section, proceeded by one second section, proceeded by one third section, proceeded by a further first section, proceeded by a further second section, proceeded by a further third section etc., e.g. RAT1-RAT2-RAT1-RAT2-RAT1-RAT2-RAT1-RAT2, or RAT1-RAT2-RAT3-RAT1-RAT2-RAT3-RAT1-RAT2-RAT3-RAT1-RAT2-RAT3, or similar.
- Not in strict order, e.g. RAT1-RAT2-RAT1-RAT2-RAT3-RAT1-RAT2-RAT1-RAT2-RAT3 wherein some RAT 3 sections are being of size zero.

More examples of interleaving sections will be described and exemplified below.

### Action 305.

Both the aspects, the need for coverage and the need to serve many users, may vary with time. The distribution and allocation of antenna elements to each RAT according to some embodiments herein may therefore also be adjusted with time in a dynamic way.

It may be obtained, for any one or more out of the first RAT and the second RAT and the one or more third RATs, any one or more out of: a radio coverage measurement data of the corresponding RAT and a data traffic load measurement data of UEs 121, 122, 123 using the corresponding RAT, e.g. by the network node 110.

### Action 306.

The allocated antenna elements of the antenna array between any of: the first RAT, the second RAT, and the one or more third RATs, may then be adjusted in regard to the interleaving and the sizes of the respective assigned sections, based on the obtained any one or more out of radio coverage measurement data of the corresponding RAT and a data traffic load measurement data of the UEs 121, 122, 123 using the corresponding RAT.

Some embodiments herein may comprise any one or more out of: The distances between neighbouring first sections are the same, the distances between neighbouring second sections are the same, and for a specific third RAT out of the one or more third RATs, the distances between neighbouring third sections are the same. An example when this will be used may be when carrier frequencies deployed in the different RATs are more or less similar.

The adjusting of the allocated antenna elements based on the obtained radio coverage measurement data of the corresponding RAT and the data traffic load measurement data of UEs 121, 122, 123 using the corresponding RAT, may comprise adjusting any one or more out of: The distances between neighbouring first sections, the distances between neighbouring second sections, for a specific third RAT out of the one or more third RATs, the distances between neighbouring third sections.

It should be noted that in some embodiments, at least antenna elements with the same polarization direction are spread with equal distance.

It should further be noted that in some embodiments the antenna elements may be of the same size irrespective of the RAT they are assigned to.

Embodiments herein such as mentioned above will now be further described and exemplified. The text below is applicable to and may be combined with any suitable embodiment described above.

Embodiments herein may apply to radio hardware such as antenna arrays where there are limitations in allocating different RATs to the same antenna element. This is for example, when the total bandwidth of involved carrier frequencies when using all antenna elements for all frequencies exceeds the bandwidth capability of the radio hardware.

As mentioned above, a large antenna array such as an AAS antenna array represents at least two aspects worthwhile to consider, namely cell-shaping and diversity. These two aspects are counter-acting each other.

Cell-shaping results from having different antenna elements contribute coherently to form a signal. To achieve a good result of this, the antenna elements should be close enough to each other. Close enough means e.g. on the order of half a wave length as one of many examples. According to embodiments herein this means that the antenna elements of one section assigned to a specific RAT should be close enough to each other. To have a flexible cell-shaping also relies on having a large enough number of antenna elements close to each other. Given a certain distance between antenna elements this simply means large section sizes represent high degree of cell shaping flexibility.

Diversity results from transmissions statistically independent from each other. To achieve a good result of this, the different antenna elements should be far enough from each other. Far enough e.g. means at least a few wave lengths. According to embodiments herein this means that the sections assigned to a specific RAT should be far enough to each other. The interleaving of sections of other RATs naturally introduces a distance that depends on the size of these sections.

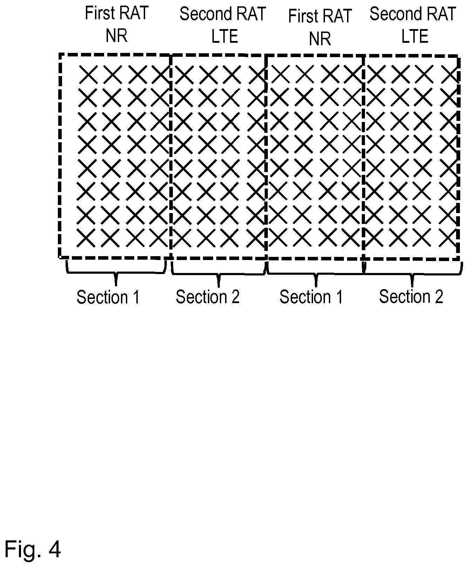

Therefore to benefit from a full geometry of the antenna array when mixing several RATs such as RATs on an antenna array, an interleaved assignment of antenna elements to RATs is provided in embodiments herein as shown in **Figure** 4. In Figure 4 first sections referred to as section 1, related to the first RAT which in this example is NR, are interleaved with second sections referred to as section 2 related to the second RAT which in this example is LTE. This means antenna elements assigned to one RAT are organized into different sections interleaved by sections assigned to another RAT. To achieve a good balance of Cell-shaping and Diversity, the sizes of the sections of antenna elements of the different RATs are based on the obtained radio coverage requirement and/or data traffic load of the different RATs. This means that the different sections separated at an increased distance would represent and increased level of diversity. The sections of a specific RAT shall not be too narrow, e.g. not too few columns in a section, since then the cell shaping may suffer and it will be less flexible. In the specific example the sizes of the first sections and the second sections are equal. Each first and second section comprises 64 cross polarized antenna elements.

There is also in general a dependency of coverage on number of antenna elements: More elements give a larger array size providing more coverage. So e.g. if a coverage requirement of the first RAT is very large, larger than for the second RAT, the size of the first sections shall be larger the size of the second sections.

Therefore, the number of antenna elements allocated to each RAT is important. It may be that one RAT operates at a carrier frequency where coverage is typically inferior, therefore, the number of antenna elements may be allocated with the intention to compensate for that inferior coverage and create a wanted coverage for each RAT. Additionally, more antenna elements create more opportunities for multi-user MIMO which typically is beneficial at high load, e.g. many UEs to serve.

The allocation of antenna elements to the different RATs may e.g. be performed by configuration, however, according to the only one scope falling under the claimed subject-matter and belonging to the present invention, this allocation is performed dynamically.

Both the aspects, need for coverage and need to serve many users, may vary with time. The distribution and allocation of antenna elements to each RAT may therefore also change with time. This means that a port-to-antenna mapping for each RAT may change by configuration or dynamically. A port-to-antenna mapping for each RAT e.g. means two things. A port represents a standard-defined reference signal that the UE 120 may use in order to decode messages. The port, or in other words reference signal, is transmitted or mapped to a group of antenna elements. Introducing several ports make it possible for a RAT to transmit over several layers concurrently to/from a UE such as the UE 120.

Even if there are hardware limitations in allocating all different RATs to all the same antenna elements it may still be possible to have two types of regions of antenna elements, one type is when the antenna element only accommodates one RAT and another type where the antenna elements serve more than one RAT simultaneously. This may happen if for instance two RATs are very similar technology-wise and one is able to accommodate those in the same region since they have similar requirements on antenna elements and associated signal processing.

The number of antenna elements, i.e. the size of the sections of antenna elements allocated to one RAT may be increased (a) if that RAT suffers from limited coverage or (b) if that RAT serves an increased load.

Likewise, the number of antenna elements, i.e. the size of the sections of antenna elements allocated to one RAT may be decreased (a) if that RAT experience good coverage or (b) if that RAT serves a smaller load.

The coverage requirement for a RAT may e.g. be derived from the number of retransmission, from bit and/or block error rate, or from Signal to Noise Ratio (SNR) from different UEs, etc. The data traffic load for a RAT may be derived from the fraction of frequency and/or time resources that are allocated to traffic, number of UEs, etc.

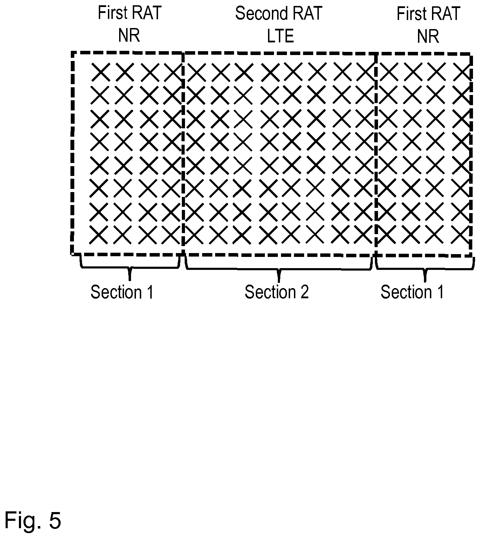

A further example of interleaved assignment of antenna elements to different RATs according to embodiments herein is shown in **Figure** 5. In Figure 5 first sections referred to as section 1, related to the first RAT which in this example is NR, are interleaved with a second section referred to as section 2 related to the second RAT which in this example is LTE. This means antenna elements assigned to one RAT are organized into different sections interleaved by sections assigned to another RAT. In this specific example the sizes of the first sections and the second section are not equal. The antenna array comprises three sections whereof the two first sections each comprises 32 cross polarized antenna elements and the second section comprises 64 cross polarized antenna elements. This example has the advantage of providing diversity for the first RAT and excellent cell shaping properties for second RAT.

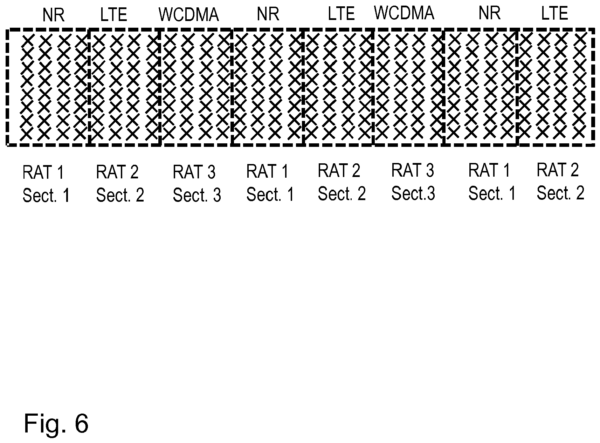

A further example of interleaved assignment of antenna elements to more than two, in this example three, different RATs according to some embodiments herein is shown in **Figure 6****.** In Figure 6 first sections referred to as sect. 1, related to the first RAT which in this example is NR, a second section referred to as sect. 2 related to the second RAT which in this example is LTE and third sections referred to as sect. 3, related to a third RAT which in this example is WCDMA are interleaved. This means antenna elements assigned to one RAT are organized into different sections interleaved by sections assigned to other RATs. In the specific example the sizes of the first sections, the second section, and the third section are equal. However, they may also be unequal. Each section each comprises 32 cross polarized antenna elements. This example may be used for cases wherein antenna elements need to be assigned for more than two RATs. This example has the advantage of providing diversity for all the RATs.

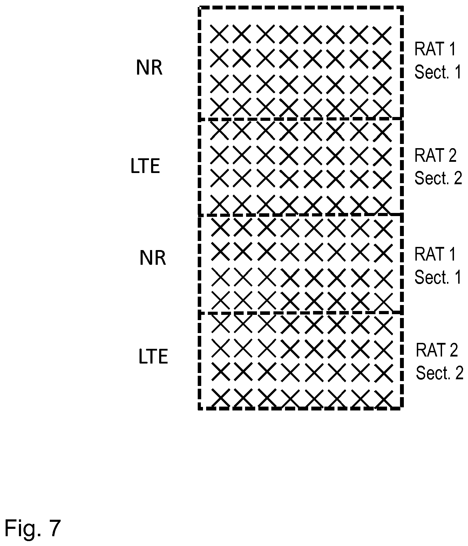

A yet further example of an interleaved assignment of antenna elements to RATs according to embodiments herein relates to vertical interleaving and is shown in **Figure 7****.** This means that the sections are interleaved in a vertical direction. In Figure 7, interleaved assignment of antenna elements to two different RATs is depicted, but also more than two RATs may be applied in a similar way. In Figure 7 first sections referred to as section 1, related to the first RAT which in this example is NR, are interleaved with a second section referred to as section 2 related to the second RAT which in this example is LTE. This means antenna elements assigned to one RAT are organized into different sections interleaved by sections assigned to another RAT. In the specific example the sizes of the first and second sections section are equal. The sections each comprises 32 cross polarized antenna elements. This example may be used for cases wherein the traffic is more distributed along the vertical dimension. This example has the advantage of providing diversity gains for both of the RATs.

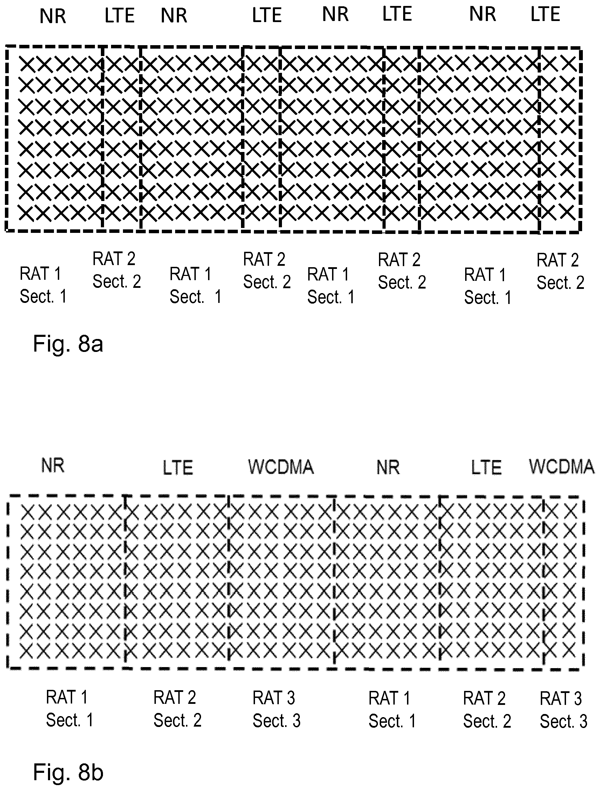

In **Figure 8a** illustrating different shaped sections relating to coverage and traffic volume and/or/capacity wherein first sections referred to as sect. 1, related to the first RAT which in this example is NR, are interleaved with a second sections referred to as sect. 2 related to the second RAT which in this example is LTE. This means antenna elements assigned to one RAT are organized into different sections interleaved by sections assigned to another RAT. In the specific example the sizes of the first sections and the second section are not equal. The first sections each comprises 48 cross polarized antenna elements, while the second sections each comprises 16 cross polarized antenna elements. This example may be used for cases wherein NR needs more coverage or more system capacity compared to LTE. This example has the advantage of providing more coverage or more system capacity for NR.

**Figure 8b** shows an example of embodiments herein with different shaped sections. The first sections referred to as sect. 1, are related to the first RAT which in this example is NR, are interleaved with second sections referred to as sect. 2 related to the second RAT which in this example is LTE, interleaved with third sections referred to as sect. 3 related to the third RAT which in this example is WCDMA. Figure 8b depicts different size of sections allocated to one RAT, e.g. because there was not columns enough for last WCDMA section in the antenna array. Not columns enough means that for instance it is aimed to allocate a certain number of columns, containing a given number of antenna elements, per RAT but that the total number of columns allocated to this specific RAT is not an integer times the intended number of columns in each section for this RAT. In Figure 8b for instance it is intended to have equally sized sections. In embodiments herein, the section sizes of each RAT are based on the coverage requirement and the data traffic load.

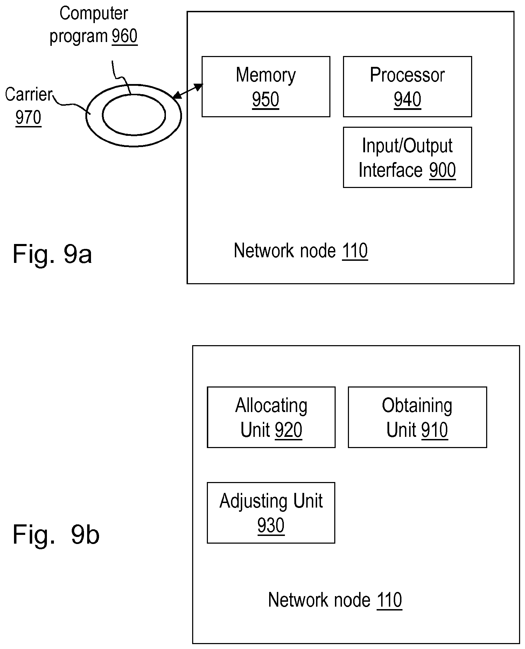

To perform the method actions for allocating antenna elements of an antenna array, the network node 110, may comprise an arrangement depicted in **Figures 9a and 9b****.** As mentioned above, the antenna array is adapted to provide radio coverage for UEs 121,122, 123 operable in the wireless communications network 100. The antenna array is adapted to support multiple RATs, comprising at least the first RAT and the second RAT. In some embodiments the multiple RATs further is adapted to comprise one or more third RATs.

The network node 110, may comprise an **input and output interface 900** configured to communicate with UEs such as the UEs 121, 122, 123. The input and output interface may comprise a wireless receiver (not shown) and a wireless transmitter (not shown).

The network node 110 is configured to, e.g. by means of an **obtaining unit 910** in the network node 110, obtain Any one or more out of: a first radio coverage requirement of the first RAT and a first data traffic load of first UEs 121 using the first RAT,
obtain any one or more out of: a second radio coverage requirement of the second RAT and a second data traffic load of the second UEs 122 using the second RAT, and in some embodiments
obtain for each one out of the one or more third RATs, any one or more out of: a third radio coverage requirement of the respective third RAT and a third data traffic load of third UEs 123 using the respective third RAT.

The network node 110 is further configured to, e.g. by means of an **allocating unit 920** in the network node 110, allocate the antenna elements of the antenna array between at least the first RAT and the second RAT. This is performed by assigning for the first RAT a number of first sections of antenna elements, and assigning for the second RAT a number of second sections of antenna elements.

The assigning is adapted to be performed by interleaving the one or more first section/s of antenna elements assigned for the first RAT with the second sections of antenna elements assigned for the second RAT. The first sizes of the assigned first sections and second sizes of the assigned second sections are to be based on, e.g. weighted based on, the obtained first radio coverage requirement and the first data traffic load, and the obtained second radio coverage requirement and the second data traffic load.

In some embodiments as mentioned above, the multiple RATs further is adapted to comprise one or more third RATs. In these embodiments the network node 110 is further configured to, e.g. by means of the **allocating unit 920** in the network node 110, allocate the antenna elements of the antenna array between at least the first RAT and the second RAT, by allocating the antenna elements of the antenna array between the first RAT, the second RAT, and the one or more third RATs, by further assigning for each of the one or more third RATs, a respective number of third sections of antenna elements. The network node 110 may further be configured to perform the assigning by interleaving the first sections of antenna elements assigned for the first RAT, the second sections of antenna elements assigned for the second RAT, and the respective one or more third sections of antenna elements assigned for the respective one or more third RAT. The first sizes of the assigned first sections, the second sizes of the assigned second sections, and the third sizes of the respective assigned one or more third sections may be adapted to be based on: the obtained first radio coverage requirement and the first data traffic load, the obtained second radio coverage requirement and the second data traffic load, and each obtained third radio coverage requirement and the third data traffic load.

According to some embodiments of the network node 110, any one or more out of: All the first sizes of the respective assigned first sections are adapted to be the same, all the second sizes of the respective assigned second sections are adapted to be the same, for a specific third RAT out of the one or more third RATs, all the third sizes of any one of the assigned third sections are adapted to be the same.

The network node 110 may further be configured to, e.g. by means of the **obtaining unit 910** in the network node 110, obtain for any one or more out of the first RAT and the second RAT and the one or more third RATs, any one or more out of: a radio coverage measurement data of the corresponding RAT and a data traffic load measurement data of UEs 121, 122, 123 using the corresponding RAT.

The network node 110 may further be configured to, e.g. by means of an **adjusting unit 930** in the network node 110, adjust the allocated antenna elements of the antenna array between any of: the first RAT, the second RAT, and the one or more third RATs, in regard to the interleaving and the sizes of the respective assigned sections, based on the obtained radio coverage measurement data of the corresponding RAT and a data traffic load measurement data of UEs 121, 122, 123 using the corresponding RAT.

According to some embodiments of the network node 110, any one or more out of: The distances between neighbouring first sections are adapted to be the same, the distances between neighbouring second sections are adapted to be the same, and for a specific third RAT out of the one or more third RATs, the distances between neighbouring third sections are adapted to be the same.

The network node 110 may further be configured to, e.g. by means of an **adjusting unit 930** in the network node 110, adjust the allocated antenna elements based on the obtained radio coverage measurement data of the corresponding RAT and the data traffic load measurement data of UEs 121, 122, 123 using the corresponding RAT, by adjusting any one or more out of: The distances between neighbouring first sections, the distances between neighbouring second sections, for a specific third RAT out of the one or more third RATs, the distances between neighbouring third sections.

In some embodiments, the interleaving of the first sections of antenna elements assigned for the first RAT with the second sections of antenna elements assigned for the second RAT is adapted to be performed in any dimension and in a series by any one out of: - In strict order assigning one first section, proceeded by one second section, proceeded by one third section, proceeded by a further first section, proceeded by a further second section, proceeded by a further third section etc., and - not in strict order.

The embodiments herein may be implemented through a respective processor or one or more processors, such as the **processor 940** of a processing circuitry in the network node 110 depicted in Figure 9a, together with respective computer program code for performing the functions and actions of the embodiments herein. The program code mentioned above may also be provided as a computer program product, for instance in the form of a data carrier carrying computer program code for performing the embodiments herein when being loaded into the network node 110. One such carrier may be in the form of a CD ROM disc. It is however feasible with other data carriers such as a memory stick. The computer program code may furthermore be provided as pure program code on a server and downloaded to the network node 110.

The network node 110 may further comprise a **memory 950** comprising one or more memory units. The memory 950 comprises instructions executable by the processor 940 in network node 110. The memory 950 is arranged to be used to store e.g. data, radio coverage requirement of different RATs, data traffic load related to different RATs, antenna element allocations of different RATs, configurations, and applications to perform the methods herein when being executed in the network node 110.

In some embodiments, a respective **computer program 960** comprises instructions, which when executed by the respective at least one processor 940, cause the at least one processor 940 of the network node 110 to perform the actions above.

In some embodiments, a respective **carrier 970** comprises the respective computer program 960, wherein the carrier 970 is one of an electronic signal, an optical signal, an electromagnetic signal, a magnetic signal, an electric signal, a radio signal, a microwave signal, or a computer-readable storage medium.

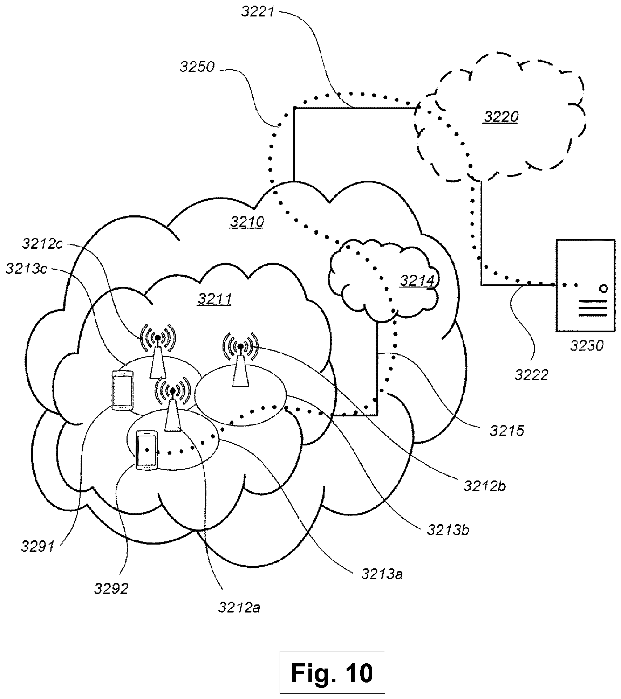

With reference to **Figure 10****,** in accordance with an embodiment, a communication system includes a telecommunication network 3210 such as the wireless communications network 100, e.g. an loT network, or a WLAN, such as a 3GPP-type cellular network, which comprises an access network 3211, such as a radio access network, and a core network 3214. The access network 3211 comprises a plurality of base stations 3212a, 3212b, 3212c, such as the network node 110, 130, access nodes, AP STAs NBs, eNBs, gNBs or other types of wireless access points, each defining a corresponding coverage area 3213a, 3213b, 3213c. Each base station 3212a, 3212b, 3212c is connectable to the core network 3214 over a wired or wireless connection 3215. A first user equipment (UE) e.g. the wireless device 120 such as a Non-AP STA 3291 located in coverage area 3213c is configured to wirelessly connect to, or be paged by, the corresponding base station 3212c. A second UE 3292 e.g. the wireless device 122 such as a Non-AP STA in coverage area 3213a is wirelessly connectable to the corresponding base station 3212a. While a plurality of UEs 3291, 3292 are illustrated in this example, the disclosed embodiments are equally applicable to a situation where a sole UE is in the coverage area or where a sole UE is connecting to the corresponding base station 3212.

The telecommunication network 3210 is itself connected to a host computer 3230, which may be embodied in the hardware and/or software of a standalone server, a cloud-implemented server, a distributed server or as processing resources in a server farm. The host computer 3230 may be under the ownership or control of a service provider, or may be operated by the service provider or on behalf of the service provider. The connections 3221, 3222 between the telecommunication network 3210 and the host computer 3230 may extend directly from the core network 3214 to the host computer 3230 or may go via an optional intermediate network 3220. The intermediate network 3220 may be one of, or a combination of more than one of, a public, private or hosted network; the intermediate network 3220, if any, may be a backbone network or the Internet; in particular, the intermediate network 3220 may comprise two or more sub-networks (not shown).

The communication system of Figure 10 as a whole enables connectivity between one of the connected UEs 3291, 3292 and the host computer 3230. The connectivity may be described as an over-the-top (OTT) connection 3250. The host computer 3230 and the connected UEs 3291, 3292 are configured to communicate data and/or signaling via the OTT connection 3250, using the access network 3211, the core network 3214, any intermediate network 3220 and possible further infrastructure (not shown) as intermediaries. The OTT connection 3250 may be transparent in the sense that the participating communication devices through which the OTT connection 3250 passes are unaware of routing of uplink and downlink communications. For example, a base station 3212 may not or need not be informed about the past routing of an incoming downlink communication with data originating from a host computer 3230 to be forwarded (e.g., handed over) to a connected UE 3291. Similarly, the base station 3212 need not be aware of the future routing of an outgoing uplink communication originating from the UE 3291 towards the host computer 3230.

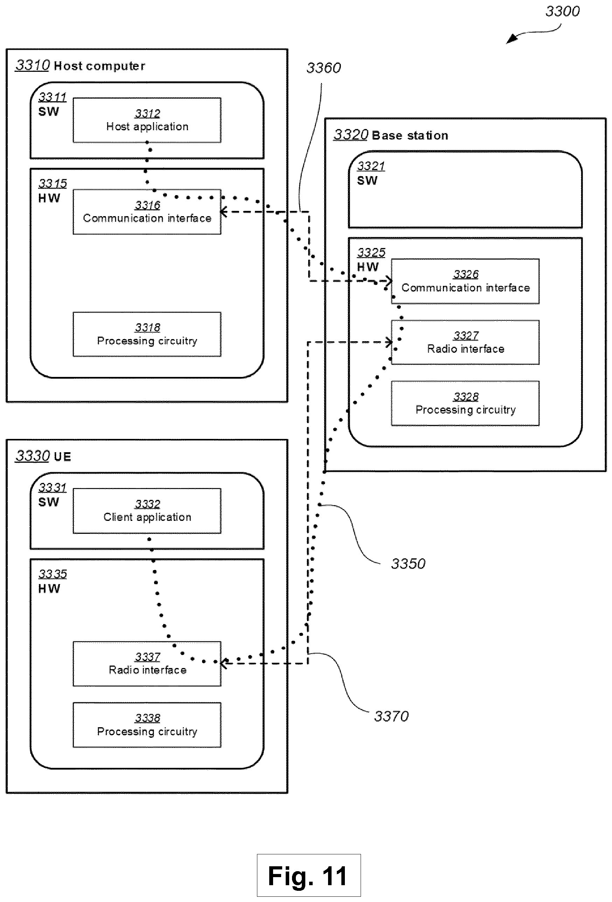

Example implementations, in accordance with an embodiment, of the UE, base station and host computer discussed in the preceding paragraphs will now be described with reference to **Figure** 11. In a communication system 3300, a host computer 3310 comprises hardware 3315 including a communication interface 3316 configured to set up and maintain a wired or wireless connection with an interface of a different communication device of the communication system 3300. The host computer 3310 further comprises processing circuitry 3318, which may have storage and/or processing capabilities. In particular, the processing circuitry 3318 may comprise one or more programmable processors, application-specific integrated circuits, field programmable gate arrays or combinations of these (not shown) adapted to execute instructions. The host computer 3310 further comprises software 3311, which is stored in or accessible by the host computer 3310 and executable by the processing circuitry 3318. The software 3311 includes a host application 3312. The host application 3312 may be operable to provide a service to a remote user, such as a UE 3330 connecting via an OTT connection 3350 terminating at the UE 3330 and the host computer 3310. In providing the service to the remote user, the host application 3312 may provide user data which is transmitted using the OTT connection 3350.
The communication system 3300 further includes a base station 3320 provided in a telecommunication system and comprising hardware 3325 enabling it to communicate with the host computer 3310 and with the UE 3330. The hardware 3325 may include a communication interface 3326 for setting up and maintaining a wired or wireless connection with an interface of a different communication device of the communication system 3300, as well as a radio interface 3327 for setting up and maintaining at least a wireless connection 3370 with a UE 3330 located in a coverage area (not shown) served by the base station 3320. The communication interface 3326 may be configured to facilitate a connection 3360 to the host computer 3310. The connection 3360 may be direct or it may pass through a core network (not shown in Figure 11) of the telecommunication system and/or through one or more intermediate networks outside the telecommunication system. In the embodiment shown, the hardware 3325 of the base station 3320 further includes processing circuitry 3328, which may comprise one or more programmable processors, application-specific integrated circuits, field programmable gate arrays or combinations of these (not shown) adapted to execute instructions. The base station 3320 further has software 3321 stored internally or accessible via an external connection.
The communication system 3300 further includes the UE 3330 already referred to. Its hardware 3335 may include a radio interface 3337 configured to set up and maintain a wireless connection 3370 with a base station serving a coverage area in which the UE 3330 is currently located. The hardware 3335 of the UE 3330 further includes processing circuitry 3338, which may comprise one or more programmable processors, application-specific integrated circuits, field programmable gate arrays or combinations of these (not shown) adapted to execute instructions. The UE 3330 further comprises software 3331, which is stored in or accessible by the UE 3330 and executable by the processing circuitry 3338. The software 3331 includes a client application 3332. The client application 3332 may be operable to provide a service to a human or non-human user via the UE 3330, with the support of the host computer 3310. In the host computer 3310, an executing host application 3312 may communicate with the executing client application 3332 via the OTT connection 3350 terminating at the UE 3330 and the host computer 3310. In providing the service to the user, the client application 3332 may receive request data from the host application 3312 and provide user data in response to the request data. The OTT connection 3350 may transfer both the request data and the user data. The client application 3332 may interact with the user to generate the user data that it provides.

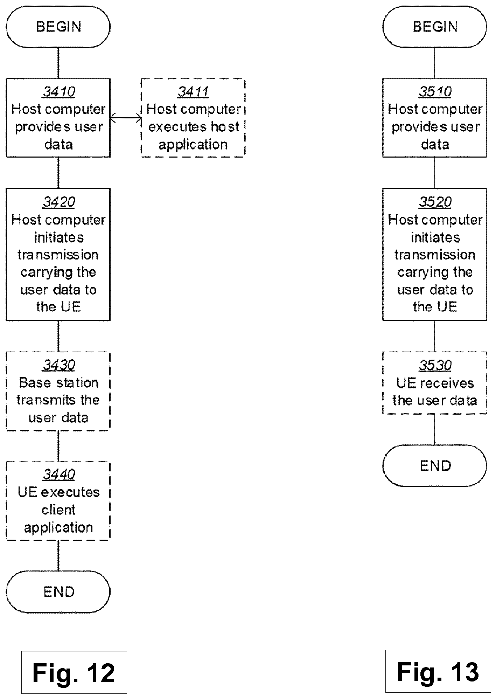

It is noted that the host computer 3310, base station 3320 and UE 3330 illustrated in Figure 11 may be identical to the host computer 3230, one of the base stations 3212a, 3212b, 3212c and one of the UEs 3291, 3292 of Figure 12, respectively. This is to say, the inner workings of these entities may be as shown in Figure 11 and independently, the surrounding network topology may be that of Figure 10.

In Figure 11, the OTT connection 3350 has been drawn abstractly to illustrate the communication between the host computer 3310 and the use equipment 3330 via the base station 3320, without explicit reference to any intermediary devices and the precise routing of messages via these devices. Network infrastructure may determine the routing, which it may be configured to hide from the UE 3330 or from the service provider operating the host computer 3310, or both. While the OTT connection 3350 is active, the network infrastructure may further take decisions by which it dynamically changes the routing (e.g., on the basis of load balancing consideration or reconfiguration of the network).

The wireless connection 3370 between the UE 3330 and the base station 3320 is in accordance with the teachings of the embodiments described throughout this disclosure. One or more of the various embodiments improve the performance of OTT services provided to the UE 3330 using the OTT connection 3350, in which the wireless connection 3370 forms the last segment. More precisely, the teachings of these embodiments may improve the applicable **RAN** effect: data rate, latency, power consumption, and thereby provide benefits such as corresponding effect on the **OTT service:** e.g. reduced user waiting time, relaxed restriction on file size, better responsiveness, extended battery lifetime.

A measurement procedure may be provided for the purpose of monitoring data rate, latency and other factors on which the one or more embodiments improve. There may further be an optional network functionality for reconfiguring the OTT connection 3350 between the host computer 3310 and UE 3330, in response to variations in the measurement results. The measurement procedure and/or the network functionality for reconfiguring the OTT connection 3350 may be implemented in the software 3311 of the host computer 3310 or in the software 3331 of the UE 3330, or both. In embodiments, sensors (not shown) may be deployed in or in association with communication devices through which the OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of the OTT connection 3350 may include message format, retransmission settings, preferred routing etc.; the reconfiguring need not affect the base station 3320, and it may be unknown or imperceptible to the base station 3320. Such procedures and functionalities may be known and practiced in the art. In certain embodiments, measurements may involve proprietary UE signaling facilitating the host computer's 3310 measurements of throughput, propagation times, latency and the like. The measurements may be implemented in that the software 3311, 3331 causes messages to be transmitted, in particular empty or 'dummy' messages, using the OTT connection 3350 while it monitors propagation times, errors etc.

**Figure 12** is a flowchart illustrating a method implemented in a communication system, in accordance with one embodiment. The communication system includes a host computer, a base station such as the network node 110, and a UE such as the wireless device 120, which may be those described with reference to Figure 10 and Figure 11. For simplicity of the present disclosure, only drawing references to Figure 12 will be included in this section. In a first action 3410 of the method, the host computer provides user data. In an optional subaction 3411 of the first action 3410, the host computer provides the user data by executing a host application. In a second action 3420, the host computer initiates a transmission carrying the user data to the UE. In an optional third action 3430, the base station transmits to the UE the user data which was carried in the transmission that the host computer initiated, in accordance with the teachings of the embodiments described throughout this disclosure. In an optional fourth action 3440, the UE executes a client application associated with the host application executed by the host computer.

**Figure 13** is a flowchart illustrating a method implemented in a communication system, in accordance with one embodiment. The communication system includes a host computer, a base station such as a AP STA, and a UE such as a Non-AP STA which may be those described with reference to Figure 10 and Figure 11. For simplicity of the present disclosure, only drawing references to Figure 13 will be included in this section. In a first action 3510 of the method, the host computer provides user data. In an optional subaction (not shown) the host computer provides the user data by executing a host application. In a second action 3520, the host computer initiates a transmission carrying the user data to the UE. The transmission may pass via the base station, in accordance with the teachings of the embodiments described throughout this disclosure. In an optional third action 3530, the UE receives the user data carried in the transmission.

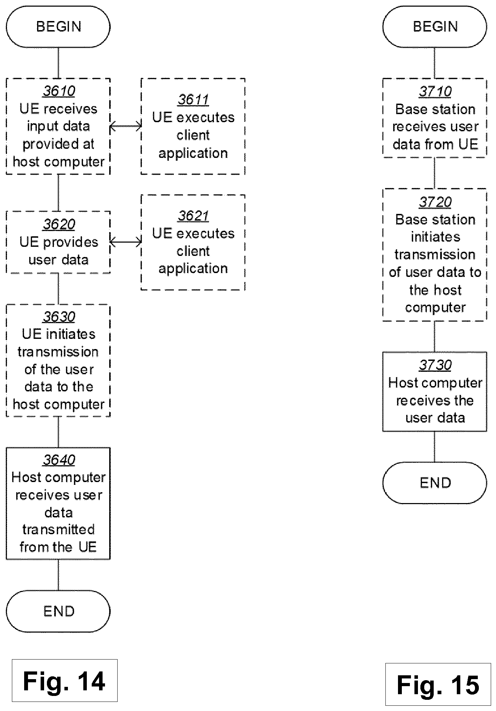

**Figure 14** is a flowchart illustrating a method implemented in a communication system, in accordance with one embodiment. The communication system includes a host computer, a base station such as a AP STA, and a UE such as a Non-AP STA which may be those described with reference to Figure 10 and Figure 11. For simplicity of the present disclosure, only drawing references to Figure 14 will be included in this section. In an optional first action 3610 of the method, the UE receives input data provided by the host computer. Additionally or alternatively, in an optional second action 3620, the UE provides user data. In an optional subaction 3621 of the second action 3620, the UE provides the user data by executing a client application. In a further optional subaction 3611 of the first action 3610, the UE executes a client application which provides the user data in reaction to the received input data provided by the host computer. In providing the user data, the executed client application may further consider user input received from the user. Regardless of the specific manner in which the user data was provided, the UE initiates, in an optional third subaction 3630, transmission of the user data to the host computer. In a fourth action 3640 of the method, the host computer receives the user data transmitted from the UE, in accordance with the teachings of the embodiments described throughout this disclosure.

**Figure 15** is a flowchart illustrating a method implemented in a communication system, in accordance with one embodiment. The communication system includes a host computer, a base station such as a AP STA, and a UE such as a Non-AP STA which may be those described with reference to Figure 10 and Figure 11. For simplicity of the present disclosure, only drawing references to Figure 15 will be included in this section. In an optional first action 3710 of the method, in accordance with the teachings of the embodiments described throughout this disclosure, the base station receives user data from the UE. In an optional second action 3720, the base station initiates transmission of the received user data to the host computer. In a third action 3730, the host computer receives the user data carried in the transmission initiated by the base station.

When using the word "comprise" or "comprising" it shall be interpreted as non-limiting, i.e. meaning "consist at least of".

## Claims

1. A method for allocating antenna elements of an antenna array, which antenna array provides radio coverage for User Equipments, UEs, (121,122, 123), operating in a wireless communications network (100), and which antenna array supports multiple Radio Access Technologies, RATs, comprising at least a first RAT and a second RAT, the method comprising:
*obtaining* (301) any one or more out of: a first radio coverage requirement of the first RAT and a first data traffic load of first UEs (121) using the first RAT,
*obtaining* (302) any one or more out of: a second radio coverage requirement of the second RAT and a second data traffic load of the second UEs (122) using the second RAT,
*allocating* (304) the antenna elements of the antenna array between at least the first RAT and the second RAT, by
assigning for the first RAT a number of first sections of antenna elements, and assigning for the second RAT a number of second sections of antenna elements,
wherein the assigning is performed by interleaving the one or more first section/s of antenna elements assigned for the first RAT with the second sections of antenna elements assigned for the second RAT, and
wherein first sizes of the assigned first sections and second sizes of the assigned second sections are based on the obtained any one out of first radio coverage requirement and the first data traffic load, and the obtained any one out of second radio coverage requirement and the second data traffic load, and
*adjusting* (306) the allocated antenna elements of the antenna array between any of: the first RAT and the second RAT, in regard to the interleaving and the sizes of the respective assigned sections, based on obtained any one out of radio coverage measurement data of the corresponding RAT and a data traffic load measurement data of UEs (121, 122) using the corresponding RAT, wherein the adjusting (306) is performed dynamically.

2. The method according to claim 1, wherein the multiple RATs further comprise one or more third RATs, and wherein the method further comprises:
*obtaining* (303) for each one out of the one or more third RATs, any one or more out of: a third radio coverage requirement of the respective third RAT and a third data traffic load of third UEs (123) using the respective third RAT, and
wherein the *allocating* (304) of the antenna elements of the antenna array between at least the first RAT and the second RAT, comprises allocating the antenna elements of the antenna array between the first RAT, the second RAT, and the one or more third RATs, by further assigning for each of the one or more third RATs, a respective number of third sections of antenna elements, and
wherein the assigning is performed by interleaving the first sections of antenna elements assigned for the first RAT, the second sections of antenna elements assigned for the second RAT, and the respective one or more third sections of antenna elements assigned for the respective one or more third RAT,
wherein the first sizes of the assigned first sections, the second sizes of the assigned second sections, and the third sizes of the respective assigned one or more third sections are based on: the obtained any one out of first radio coverage requirement and the first data traffic load, the obtained any one out of second radio coverage requirement and the second data traffic load, and each obtained any one out of third radio coverage requirement and the third data traffic load.

3. The method according to claim 2, wherein any one or more out of:
all the first sizes of the respective assigned first sections are the same,
all the second sizes of the respective assigned second sections are the same,
for a specific third RAT out of the one or more third RATs, all the third sizes of any one of the assigned third sections are the same.

4. The method according to any of the claims 2-3, further comprising:
*obtaining* (305) for any one or more out of the first RAT and the second RAT and the one or more third RATs, any one or more out of: a radio coverage measurement data of the corresponding RAT and a data traffic load measurement data of UEs (121, 122, 123) using the corresponding RAT,

5. The method according to any of the claims 2-4, wherein any one or more out of:
the distances between neighbouring first sections are the same,
the distances between neighbouring second sections are the same,
for a specific third RAT out of the one or more third RATs, the distances between neighbouring third sections are the same.

6. The method according to claims 4 and 5, wherein the *adjusting* (306) of the allocated antenna elements based on the obtained any one out of radio coverage measurement data of the corresponding RAT and the data traffic load measurement data of UEs (121, 122, 123) using the corresponding RAT, comprises adjusting any one or more out of:
the distances between neighbouring first sections, the distances between neighbouring second sections, for a specific third RAT out of the one or more third RATs, the distances between neighbouring third sections.

7. The method according to any the claims 1-6, wherein the interleaving of the first sections of antenna elements assigned for the first RAT with the second sections of antenna elements assigned for the second RAT is performed in any dimension and in a series by any one out of:
- in strict order assigning one first section, proceeded by one second section, proceeded by one third section, proceeded by a further first section, proceeded by a further second section, proceeded by a further third section etc., and
- not in strict order.

8. The method according to any the claims 1-7, wherein the method is performed by a network node (110) operating in the wireless communications network (100), which network node (110) comprises the antenna array.

9. A computer program (960) comprising instructions, which when executed by a processor (940), causes the processor (940) to perform actions according to any of the claims 1-8.

10. A carrier (970) comprising the computer program (960) of claim 9, wherein the carrier (970) is one of an electronic signal, an optical signal, an electromagnetic signal, a magnetic signal, an electric signal, a radio signal, a microwave signal, or a computer-readable storage medium.

11. A network node (110) for allocating antenna elements of an antenna array, which antenna array is adapted to provide radio coverage for User Equipments, UEs, (121,122, 123), operable in a wireless communications network (100), and which antenna array is adapted to support multiple Radio Access Technologies, RATs, comprising at least a first RAT and a second RAT, the network node (110) being configured to:
*obtain* any one or more out of: a first radio coverage requirement of the first RAT and a first data traffic load of first UEs (121) using the first RAT,
*obtain* any one or more out of: a second radio coverage requirement of the second RAT and a second data traffic load of the second UEs (122) using the second RAT,
*allocate* the antenna elements of the antenna array between at least the first RAT and the second RAT, by
assigning for the first RAT a number of first sections of antenna elements, and assigning for the second RAT a number of second sections of antenna elements,
wherein the assigning is adapted to be performed by interleaving the one or more first section/s of antenna elements assigned for the first RAT with the second sections of antenna elements assigned for the second RAT, and
wherein first sizes of the assigned first sections and second sizes of the assigned second sections are to be based on the obtained any one out of first radio coverage requirement and the first data traffic load, and the obtained any one out of second radio coverage requirement and the second data traffic load, and
adjust the allocated antenna elements of the antenna array between any of: the first RAT and the second RAT, in regard to the interleaving and the sizes of the respective assigned sections, based on obtained any one out of radio coverage measurement data of the corresponding RAT and a data traffic load measurement data of UEs (121, 122) using the corresponding RAT, wherein the adjusting is adapted to be performed dynamically.

12. The network node (110) according to claim 11, wherein the multiple RATs further is adapted to comprise one or more third RATs, and wherein the network node (110) further is configured to:
*obtain* for each one out of the one or more third RATs, any one or more out of: a third radio coverage requirement of the respective third RAT and a third data traffic load of third UEs (123) using the respective third RAT, and
wherein the network node (110) further is configured to *allocate* the antenna elements of the antenna array between at least the first RAT and the second RAT, by allocating the antenna elements of the antenna array between the first RAT, the second RAT, and the one or more third RATs, by further assigning for each of the one or more third RATs, a respective number of third sections of antenna elements, and
wherein the network node (110) further is configured to perform the assigning by interleaving the first sections of antenna elements assigned for the first RAT, the second sections of antenna elements assigned for the second RAT, and the respective one or more third sections of antenna elements assigned for the respective one or more third RAT, and
wherein the first sizes of the assigned first sections, the second sizes of the assigned second sections, and the third sizes of the respective assigned one or more third sections are adapted to be based on: the obtained any one out of first radio coverage requirement and the first data traffic load, the obtained any one out of second radio coverage requirement and the second data traffic load, and each obtained any one out of third radio coverage requirement and the third data traffic load.

13. The network node (110) according to claim 12, wherein any one or more out of:
all the first sizes of the respective assigned first sections are adapted to be the same,
all the second sizes of the respective assigned second sections are adapted to be the same,
for a specific third RAT out of the one or more third RATs, all the third sizes of any one of the assigned third sections are adapted to be the same.

14. The network node (110) according to any of the claims 12-13, further being configured to:
*obtain* for any one or more out of the first RAT and the second RAT and the one or more third RATs, any one or more out of: a radio coverage measurement data of the corresponding RAT and a data traffic load measurement data of UEs (121, 122, 123) using the corresponding RAT, and

15. The network node (110) according to any of the claims 12-14, wherein any one or more out of:
the distances between neighbouring first sections are adapted to be the same,
the distances between neighbouring second sections are adapted to be the same,
for a specific third RAT out of the one or more third RATs, the distances between neighbouring third sections are adapted to be the same.

16. The network node (110) according to claims 14 and 15, wherein the network node (110) further is configured to *adjust* the allocated antenna elements based on the obtained any one out of radio coverage measurement data of the corresponding RAT and the data traffic load measurement data of UEs (121, 122, 123) using the corresponding RAT, by adjusting any one or more out of:
the distances between neighbouring first sections, the distances between neighbouring second sections, for a specific third RAT out of the one or more third RATs, the distances between neighbouring third sections.

17. The network node (110) according to any the claims 11-16, wherein the interleaving of the first sections of antenna elements assigned for the first RAT with the second sections of antenna elements assigned for the second RAT is adapted to be performed in any dimension and in a series by any one out of:
- in strict order assigning one first section, proceeded by one second section, proceeded by one third section, proceeded by a further first section, proceeded by a further second section, proceeded by a further third section etc., and
- not in strict order.

## Patentansprüche

1. Verfahren zum Zuordnen von Antennenelementen einer Antennengruppe, wobei die Antennengruppe eine Funkabdeckung für Benutzerausrüstungen, UEs, (121, 122, 123) bereitstellt, die in einem drahtlosen Kommunikationsnetzwerk (100) arbeiten, und wobei die Antennengruppe mehrere Funkzugangstechnologien (Radio Access Technologies), RATs, unterstützt, die mindestens eine erste RAT und eine zweite RAT umfassen, wobei das Verfahren umfasst:
*Erhalten* (301) eines oder mehrerer aus: einer ersten Funkabdeckungsanforderung der ersten RAT und einer ersten Datenverkehrslast erster UEs (121), die die erste RAT verwenden,
*Erhalten* (302) eines oder mehrerer aus: einer zweiten Funkabdeckungsanforderung der zweiten RAT und einer zweiten Datenverkehrslast der zweiten UEs (122), die die zweite RAT verwenden,
*Zuordnen* (304) der Antennenelemente der Antennengruppe unter mindestens der ersten RAT und der zweiten RAT durch
Zuweisen einer Anzahl von ersten Abschnitten von Antennenelementen zu der ersten RAT und Zuweisen einer Anzahl von zweiten Abschnitten von Antennenelementen zu der zweiten RAT,
wobei das Zuweisen durch Verschachteln des einen oder der mehreren ersten Abschnitte von Antennenelementen, die der ersten RAT zugewiesen sind, mit den zweiten Abschnitten von Antennenelementen, die der zweiten RAT zugewiesen sind, durchgeführt wird, und
wobei erste Größen der zugewiesenen ersten Abschnitte und zweite Größen der zugewiesenen zweiten Abschnitte auf der erhaltenen einen aus der ersten Funkabdeckungsanforderung und der ersten Datenverkehrslast und der erhaltenen einen aus der zweiten Funkabdeckungsanforderung und der zweiten Datenverkehrslast basieren, und
*Anpassen* (306) der zugeordneten Antennenelemente der Antennengruppe unter einer von: der ersten RAT und der zweiten RAT, in Bezug auf das Verschachteln und die Größen der jeweiligen zugewiesenen Abschnitte, basierend auf einem erhaltenen einen aus Funkabdeckungsmessdaten der entsprechenden RAT und Datenverkehrslastmessdaten von UEs (121, 122), die die entsprechende RAT verwenden, wobei das Anpassen (306) dynamisch durchgeführt wird.

2. Verfahren nach Anspruch 1, wobei die mehreren RATs weiter eine oder mehrere dritte RATs umfassen und wobei das Verfahren weiter umfasst:
*Erhalten* (303), für jede der einen oder der mehreren dritten RATs, eines oder mehrere aus: einer dritten Funkabdeckungsanforderung der jeweiligen dritten RAT und eine dritte Datenverkehrslast dritter UEs (123), die die jeweilige dritte RAT verwenden, und
wobei das Zuordnen (304) der Antennenelemente der Antennengruppe unter mindestens der ersten RAT und der zweiten RAT ein Zuordnen der Antennenelemente der Antennengruppe unter der ersten RAT, der zweiten RAT und der einen oder den mehreren dritten RATs umfasst, indem weiter für jede der einen oder der mehreren dritten RATs eine jeweilige Anzahl von dritten Abschnitten von Antennenelementen zugewiesen wird, und
wobei das Zuweisen durch Verschachteln der ersten Abschnitte von Antennenelementen, die der ersten RAT zugewiesen sind, der zweiten Abschnitte von Antennenelementen, die der zweiten RAT zugewiesen sind, und des jeweiligen einen oder der mehreren dritten Abschnitte von Antennenelementen, die der jeweiligen einen oder den mehreren dritten RATs zugewiesen sind, durchgeführt wird,
wobei die ersten Größen der zugewiesenen ersten Abschnitte, die zweiten Größen der zugewiesenen zweiten Abschnitte und die dritten Größen des jeweiligen zugewiesenen einen oder der jeweiligen zugewiesenen mehreren dritten Abschnitte basieren auf: dem erhaltenen einen aus der ersten Funkabdeckungsanforderung und der ersten Datenverkehrslast, dem erhaltenen einen aus der zweiten Funkabdeckungsanforderung und der zweiten Datenverkehrslast und jedem erhaltenen einen aus der dritten Funkabdeckungsanforderung und der dritten Datenverkehrslast.

3. Verfahren nach Anspruch 2, wobei eines oder mehrere von Folgenden erfüllt ist, indem:
alle ersten Größen der jeweiligen zugeordneten ersten Abschnitte gleich sind,
alle zweiten Größen der jeweiligen zugeordneten zweiten Abschnitte gleich sind,
für eine spezifische dritte RAT aus der einen oder den mehreren dritten RATs alle dritten Größen eines der zugewiesenen dritten Abschnitte gleich sind.

4. Verfahren nach einem der Ansprüche 2-3 weiter umfassend:
*Erhalten* (305), für eine oder mehrere aus der ersten RAT und der zweiten RAT und der einen oder den mehreren dritten RATs, eines oder mehrerer aus: Funkabdeckungsmessdaten der jeweiligen RAT und Datenverkehrslastmessdaten von UEs (121, 122, 123), die die entsprechende RAT verwenden,

5. Verfahren nach einem der Ansprüche 2-4, wobei eines oder mehrere von Folgenden erfüllt ist, indem:
die Abstände zwischen benachbarten ersten Abschnitten gleich sind,
die Abstände zwischen benachbarten zweiten Abschnitten gleich sind,
für eine spezifische dritte RAT aus der einen oder den mehreren dritten RATs die Abstände zwischen benachbarten dritten Abschnitten gleich sind.

6. Verfahren nach den Ansprüchen 4 und 5, wobei das Anpassen (306) der zugeordneten Antennenelemente basierend auf dem erhaltenen einem aus Funkabdeckungsmessdaten der entsprechenden RAT und den Datenverkehrslastmessdaten von UEs (121, 122, 123), die die entsprechende RAT verwenden, ein Anpassen eines oder mehrerer aus den Folgenden umfasst:
der Abstände zwischen benachbarten ersten Abschnitten, der Abstände zwischen benachbarten zweiten Abschnitten, für eine spezifische dritte RAT aus der einen oder den mehreren dritten RATs, der Abstände zwischen benachbarten dritten Abschnitten.

7. Verfahren nach einem der Ansprüche 1-6, wobei das Verschachteln der ersten Abschnitte von Antennenelementen, die der ersten RAT zugewiesen sind, mit den zweiten Abschnitten von Antennenelementen, die der zweiten RAT zugewiesen sind, in einer beliebigen Dimension und in einer Aufeinanderfolge mit einem der Folgenden durchgeführt wird:
- in strenger Reihenfolge, Zuweisen eines ersten Abschnitts, gefolgt von einem zweiten Abschnitt, gefolgt von einem dritten Abschnitt, gefolgt von einem weiteren ersten Abschnitt, gefolgt von einem weiteren zweiten Abschnitt, gefolgt von einem weiteren dritten Abschnitt, usw. und
- nicht in strenger Reihenfolge.

8. Verfahren nach einem der Ansprüche 1-7, wobei das Verfahren von einem Netzwerkknoten (110) durchgeführt wird, der in dem drahtlosen Kommunikationsnetzwerk (100) arbeitet, wobei der Netzwerkknoten (110) die Antennengruppe umfasst.

9. Computerprogramm (960), das Befehle umfasst, die, wenn sie von einem Prozessor (940) ausgeführt werden, den Prozessor (940) veranlassen, Aktionen gemäß einem der Ansprüche 1 bis 8 durchzuführen.

10. Träger (970), der das Computerprogramm (960) nach Anspruch 9 umfasst, wobei der Träger (970) eines von einem elektronischen Signal, einem optischen Signal, einem elektromagnetischen Signal, einem magnetischen Signal, einem elektrischen Signal, einem Funksignal, einem Mikrowellensignal oder einem computerlesbaren Speichermedium ist.

11. Netzwerkknoten (110) zum Zuordnen von Antennenelementen einer Antennengruppe, wobei die Antennengruppe dazu angepasst ist, eine Funkabdeckung für Benutzerausrüstungen, UEs, (121, 122, 123) bereitzustellen, die in einem drahtlosen Kommunikationsnetzwerk (100) betreibbar sind, und wobei die Antennengruppe dazu angepasst ist, mehrere Funkzugangstechnologien (Radio Access Technologies), RATs, zu unterstützen, die mindestens eine erste RAT und eine zweite RAT umfassen, wobei der Netzwerkknoten (110) konfiguriert ist zum:
*Erhalten* eines oder mehrerer aus: einer ersten Funkabdeckungsanforderung der ersten RAT und einer ersten Datenverkehrslast erster UEs (121), die die erste RAT verwenden,
*Erhalten* eines oder mehrerer aus: einer zweiten Funkabdeckungsanforderung der zweiten RAT und einer zweiten Datenverkehrslast der zweiten UEs (122), die die zweite RAT verwenden,
*Zuordnen* der Antennenelemente der Antennengruppe unter mindestens der ersten RAT und der zweiten RAT durch
Zuweisen einer Anzahl von ersten Abschnitten von Antennenelementen zu der ersten RAT und Zuweisen einer Anzahl von zweiten Abschnitten von Antennenelementen zu der zweiten RAT,
wobei das Zuweisen dazu angepasst ist, durch Verschachteln des einen oder der mehreren ersten Abschnitte von Antennenelementen, die der ersten RAT zugewiesen sind, mit den zweiten Abschnitten von Antennenelementen, die der zweiten RAT zugewiesen sind, durchgeführt zu werden, und
wobei erste Größen der zugewiesenen ersten Abschnitte und zweite Größen der zugewiesenen zweiten Abschnitte auf dem erhaltenen einen aus der ersten Funkabdeckungsanforderung und der ersten Datenverkehrslast und dem erhaltenen einen aus der zweiten Funkabdeckungsanforderung und der zweiten Datenverkehrslast zu basieren sind und
Anpassen der zugeordneten Antennenelemente der Antennengruppe unter einer von: der ersten RAT und der zweiten RAT, in Bezug auf das Verschachteln und die Größen der jeweiligen zugewiesenen Abschnitte, basierend auf einem erhaltenen einen aus Funkabdeckungsmessdaten der entsprechenden RAT und Datenverkehrslastmessdaten von UEs (121, 122), die die entsprechende RAT verwenden, wobei das Anpassen dazu angepasst ist, dynamisch durchgeführt zu werden.

12. Netzwerkknoten (110) nach Anspruch 11, wobei die mehreren RATs weiter dazu angepasst sind, eine oder mehrere dritte RATs zu umfassen, und wobei der Netzwerkknoten (110) weiter konfiguriert ist zum:
*Erhalten,* für jede aus der einen oder den mehreren dritten RATs, eines oder mehrere aus: einer dritten Funkabdeckungsanforderung der jeweiligen dritten RAT und eine dritte Datenverkehrslast dritter UEs (123), die die jeweilige dritte RAT verwenden, und
wobei der Netzwerkknoten (110) weiter dazu konfiguriert ist, die Antennenelemente der Antennengruppe unter mindestens der ersten RAT und der zweiten RAT zuzuordnen, durch Zuordnen der Antennenelemente der Antennengruppe unter der ersten RAT, der zweiten RAT und der einen oder den mehreren dritten RATs, indem weiter für jede der einen oder der mehreren dritten RATs eine jeweilige Anzahl von dritten Abschnitten von Antennenelementen zugewiesen wird, und
wobei der Netzwerkknoten (110) weiter dazu konfiguriert ist, das Zuweisen durch Verschachteln der ersten Abschnitte von Antennenelementen, die der ersten RAT zugewiesen sind, der zweiten Abschnitte von Antennenelementen, die der zweiten RAT zugewiesen sind, und des jeweiligen einen oder der jeweiligen mehreren dritten Abschnitte von Antennenelementen, die der jeweiligen einen oder den jeweiligen mehreren dritten RATs zugewiesen sind, durchzuführen, und
wobei die ersten Größen der zugewiesenen ersten Abschnitte, die zweiten Größen der zugewiesenen zweiten Abschnitte und die dritten Größen des jeweiligen zugewiesenen einen oder der jeweiligen zugewiesenen mehreren dritten Abschnitte dazu angepasst sind, zu basieren auf: dem erhaltenen einen aus der ersten Funkabdeckungsanforderung und der ersten Datenverkehrslast, dem erhaltenen einen aus der zweiten Funkabdeckungsanforderung und der zweiten Datenverkehrslast und jedem erhaltenen einen aus der dritten Funkabdeckungsanforderung und der dritten Datenverkehrslast.

13. Netzwerkknoten (110) nach Anspruch 12, wobei eines oder mehrere von Folgenden erfüllt ist, indem:
alle ersten Größen der jeweiligen zugeordneten ersten Abschnitte dazu angepasst sind, gleich zu sein,
alle zweiten Größen der jeweiligen zugeordneten zweiten Abschnitte dazu angepasst sind, gleich zu sein,
für eine spezifische dritte RAT aus der einen oder mehreren dritten RATs alle dritten Größen eines der zugewiesenen dritten Abschnitte dazu angepasst sind, gleich zu sein.

14. Netzwerkknoten (110) nach einem der Ansprüche 12-13, der weiter konfiguriert ist zum:
*Erhalten,* für eine oder mehrere aus der ersten RAT und der zweiten RAT und der einen oder den mehreren dritten RATs, eines oder mehrerer aus: Funkabdeckungsmessdaten der jeweiligen RAT und Datenverkehrslastmessdaten von UEs (121, 122, 123), die die entsprechende RAT verwenden, und

15. Netzwerkknoten (110) nach einem der Ansprüche 12-14, wobei eines oder mehrere von Folgenden erfüllt ist, indem:
die Abstände zwischen benachbarten ersten Abschnitten dazu angepasst sind, gleich zu sein,
die Abstände zwischen benachbarten zweiten Abschnitten dazu angepasst sind, gleich zu sein,
für eine spezifische dritte RAT aus der einen oder den mehreren dritten RATs die Abstände zwischen benachbarten dritten Abschnitten dazu angepasst sind, gleich zu sein.

16. Netzwerkknoten (110) nach den Ansprüchen 14 und 15, wobei der Netzwerkknoten (110) weiter dazu konfiguriert ist, die zugeordneten Antennenelemente basierend auf dem erhaltenen einem aus Funkabdeckungsmessdaten der entsprechenden RAT und den Datenverkehrslastmessdaten von UEs (121, 122, 123), die die entsprechende RAT verwenden, anzupassen, durch Anpassen eines oder mehrerer aus den Folgenden:
der Abstände zwischen benachbarten ersten Abschnitten, der Abstände zwischen benachbarten zweiten Abschnitten, für eine spezifische dritte RAT aus der einen oder den mehreren dritten RATs, der Abstände zwischen benachbarten dritten Abschnitten.

17. Netzwerkknoten (110) nach einem der Ansprüche 11-16, wobei das Verschachteln der ersten Abschnitte von Antennenelementen, die der ersten RAT zugewiesen sind, mit den zweiten Abschnitten von Antennenelementen, die der zweiten RAT zugewiesen sind, dazu angepasst ist, in einer beliebigen Dimension und in einer Aufeinanderfolge mit einem der Folgenden durchgeführt zu werden:
- in strenger Reihenfolge, Zuweisen eines ersten Abschnitts, gefolgt von einem zweiten Abschnitt, gefolgt von einem dritten Abschnitt, gefolgt von einem weiteren ersten Abschnitt, gefolgt von einem weiteren zweiten Abschnitt, gefolgt von einem weiteren dritten Abschnitt, usw. und
- nicht in strenger Reihenfolge.

## Revendications

1. Procédé d'attribution d'éléments d'antenne d'un réseau d'antennes, lequel réseau d'antennes fournit une couverture radio pour des équipements d'utilisateur, UE, (121,122, 123), fonctionnant dans un réseau de communication sans fil (100), et lequel réseau d'antennes prend en charge plusieurs technologies d'accès radio, RAT, comprenant au moins une première RAT et une deuxième RAT, le procédé comprenant les étapes consistant à :
*obtenir* (301) une quelconque ou plusieurs parmi: une première exigence de couverture radio de la première RAT et une première charge de trafic de données de premiers UE (121) en utilisant la première RAT,
*obtenir* (302) une quelconque ou plusieurs parmi: une deuxième exigence de couverture radio de la deuxième RAT et une deuxième charge de trafic de données de deuxièmes UE (122) en utilisant la deuxième RAT,
*attribuer* (304) les éléments d'antenne du réseau d'antennes entre au moins la première RAT et la deuxième RAT, en
affectant pour la première RAT un certain nombre de premières sections d'éléments d'antenne, et affectant pour la deuxième RAT un certain nombre de deuxièmes sections d'éléments d'antenne,
dans lequel l'affectation est effectuée en entrelaçant les une ou plusieurs premières sections d'éléments d'antenne affectées pour la première RAT avec les deuxièmes sections d'éléments d'antenne affectées pour la deuxième RAT, et
dans lequel des premières tailles des premières sections affectées et les deuxièmes tailles des deuxièmes sections affectées sont basées sur la quelconque obtenue parmi une première exigence de couverture radio et la première charge de trafic de données, et la quelconque obtenue parmi une deuxième exigence de couverture radio et la deuxième charge de trafic de données, et
*ajuster* (306) les éléments d'antenne attribués du réseau d'antennes entre une quelconque parmi : la première RAT et la deuxième RAT, en ce qui concerne l'entrelacement et les tailles des sections affectées respectives, sur la base de quelconques obtenues de données de mesure de couverture radio de la RAT correspondante et de données de mesure de charge de trafic de données des UE (121, 122) utilisant la RAT correspondante, dans lequel l'ajustement (306) est effectué de manière dynamique.

2. Procédé selon la revendication 1, dans lequel les multiples RAT comprennent en outre une ou plusieurs troisièmes RAT, et dans lequel le procédé comprend en outre l'étape consistant à :
*obtenir* (303) pour chacune des troisièmes RAT, une ou plusieurs parmi : une troisième exigence de couverture radio de la troisième RAT respective et une troisième charge de trafic de données de troisièmes UE (123) utilisant la troisième RAT respective, et
dans lequel l'attribution (304) des éléments d'antenne du réseau d'antennes entre au moins la première RAT et la deuxième RAT comprend une attribution des éléments d'antenne du réseau d'antennes entre la première RAT, la deuxième RAT et les une ou plusieurs troisièmes RAT, en affectant en outre à chacune des une ou plusieurs troisièmes RAT un nombre respectif de troisièmes sections d'éléments d'antenne, et
dans lequel l'affectation est effectuée en entrelaçant les premières sections d'éléments d'antenne affectées pour la première RAT, les deuxièmes sections d'éléments d'antenne affectées pour la deuxième RAT, et les une ou plusieurs troisièmes sections respectives d'éléments d'antenne affectés pour les une ou plusieurs troisièmes RAT respectives,
dans lequel les premières tailles des premières sections affectées, les deuxièmes tailles des deuxièmes sections affectées et les troisièmes tailles des une ou plusieurs troisièmes sections affectées respectives sont basées sur : la quelconque obtenue parmi une première exigence de couverture radio et la première charge de trafic de données, la quelconque obtenue parmi une deuxièmes exigence de couverture radio et la deuxième charge de trafic de données, et chaque quelconque obtenue parmi des troisièmes exigences de couverture radio et la troisième charge de trafic de données.

3. Procédé selon la revendication 2, dans lequel un quelconque ou plusieurs parmi :
toutes les premières tailles des premières sections affectées respectives sont les mêmes,
toutes les deuxièmes tailles des deuxièmes sections affectées respectives sont les mêmes,
pour une troisième RAT spécifique parmi les une ou plusieurs troisièmes RAT, toutes les troisièmes tailles de l'une quelconque des troisièmes sections affectées sont les mêmes.

4. Procédé selon l'une quelconque des revendications 2-3, comprenant en outre l'étape consistant à :
*obtenir* (305) pour une quelconque ou plusieurs parmi la première RAT et la deuxième RAT et les une ou plusieurs troisièmes RAT, une quelconque ou plusieurs parmi : des données de mesure de couverture radio de la RAT correspondante et des données de mesure de charge de trafic de données d'UE (121, 122, 123) utilisant la RAT correspondante,

5. Procédé selon l'une quelconque des revendications 2-4, dans lequel un quelconque ou plusieurs parmi :
les distances entre des premières sections voisines sont les mêmes,
les distances entre des deuxièmes sections voisines sont les mêmes,
pour une troisième RAT spécifique parmi les une ou plusieurs troisièmes RAT, les distances entre des troisièmes sections voisines sont les mêmes.

6. Procédé selon les revendications 4 et 5, dans lequel *l'ajustement* (306) des éléments d'antenne attribués sur la base des quelconques obtenues parmi des données de mesure de couverture radio de la RAT correspondante et les données de mesure de charge de trafic de données des UE (121, 122, 123) à utilisant la RAT correspondante, comprend un ajustement d'une quelconque ou plusieurs parmi :
les distances entre des premières sections voisines, les distances entre des deuxièmes sections voisines, pour une troisième RAT spécifique parmi les une ou plusieurs troisièmes RAT, les distances entre des troisièmes sections voisines.

7. Procédé selon l'une quelconque des revendications 1-6, dans lequel l'entrelacement des premières sections d'éléments d'antenne affectées pour la première RAT avec les deuxièmes sections d'éléments d'antenne affectées pour la deuxième RAT est effectué dans n'importe quelle dimension et en série par un quelconque parmi :
- dans un ordre strict en affectant une première section, précédée d'une deuxième section, précédée d'une troisième section, précédée d'une première section supplémentaire, précédée d'une deuxième section supplémentaire, précédée d'une troisième section supplémentaire, etc., et
- pas dans un ordre strict.

8. Procédé selon l'une quelconque des revendications 1-7, dans lequel le procédé est exécuté par un nœud de réseau (110) fonctionnant dans le réseau de communication sans fil (100), lequel nœud de réseau (110) comprend le réseau d'antennes.

9. Programme informatique (960) comprenant des instructions qui, lorsqu'elles sont exécutées par un processeur (940), amènent le processeur (940) à exécuter des actions selon l'une quelconque des revendications 1-8.

10. Support (970) comprenant le programme informatique (960) de la revendication 9, dans lequel le support (970) est l'un d'un signal électronique, d'un signal optique, d'un signal électromagnétique, d'un signal magnétique, d'un signal électrique, d'un signal radio, d'un signal hyperfréquence ou un support de stockage lisible sur ordinateur.

11. Nœud de réseau (110) pour attribuer des éléments d'antenne d'un réseau d'antennes, lequel réseau d'antennes est adapté pour fournir une couverture radio pour des équipements d'utilisateur, UE (121, 122, 123), pouvant fonctionner dans un réseau de communication sans fil (100), et lequel réseau d'antennes est adapté pour prendre en charge plusieurs technologies d'accès radio, RAT, comprenant au moins une première RAT et une deuxième RAT, le nœud de réseau (110) étant configuré pour :
*obtenir* une quelconque ou plusieurs parmi : une première exigence de couverture radio de la première RAT et une première charge de trafic de données de premiers UE (121) utilisant la première RAT,
*obtenir* une ou plusieurs parmi : une deuxième exigence de couverture radio de la deuxième RAT et une deuxième charge de trafic de données des deuxièmes UE (122) utilisant la deuxième RAT,
*attribuer* les éléments d'antenne du réseau d'antennes entre au moins la première RAT et la deuxième RAT, en
affectant pour la première RAT un certain nombre de premières sections d'éléments d'antenne, et affectant pour la deuxième RAT un certain nombre de deuxièmes sections d'éléments d'antenne,
dans lequel l'affectation est adaptée pour être effectuée en entrelaçant les une ou plusieurs premières sections d'éléments d'antenne affectées pour la première RAT avec les deuxièmes sections d'éléments d'antenne affectées pour la deuxième RAT, et
dans lequel les premières tailles des premières sections affectées et les deuxièmes tailles des deuxièmes sections affectées doivent être basées sur la quelconque obtenue parmi une première exigence de couverture radio et la première charge de trafic de données, et la quelconque obtenue parmi une deuxième exigence de couverture radio et la deuxième charge de trafic de données, et
ajuster les éléments d'antenne attribués du réseau d'antennes entre une quelconque parmi : la première RAT et la deuxième RAT, en ce qui concerne l'entrelacement et les tailles des sections affectées respectives, sur la base de quelconques obtenues de données de mesure de couverture radio de la RAT correspondante et de données de mesure de charge de trafic de données des UE (121, 122) utilisant la RAT correspondante, dans lequel l'ajustement est adapté pour être effectué de manière dynamique.

12. Nœud de réseau (110) selon la revendication 11, dans lequel les multiples RAT sont en outre adaptées pour comprendre une ou plusieurs troisièmes RAT, et dans lequel le nœud de réseau (110) est en outre configuré pour :
*obtenir* pour chacun des une ou plusieurs troisièmes RAT, une ou plusieurs parmi : une troisième exigence de couverture radio de la troisième RAT respective et une troisième charge de trafic de données de troisièmes UE (123) utilisant la troisième RAT respective, et
dans lequel le nœud de réseau (110) est en outre configuré pour attribuer les éléments d'antenne du réseau d'antennes entre au moins la première RAT et la deuxième RAT, en attribuant les éléments d'antenne du réseau d'antennes entre la première RAT, la deuxième RAT et les une ou plusieurs troisièmes RAT, en affectant en outre à chacune des une ou plusieurs troisièmes RAT un nombre respectif de troisièmes sections d'éléments d'antenne, et
dans lequel le nœud de réseau (110) est en outre configuré pour effectuer l'affectation en entrelaçant les premières sections d'éléments d'antenne affectées pour la première RAT, les deuxièmes sections d'éléments d'antenne affectées pour la deuxième RAT, et les une ou plusieurs troisièmes sections d'antenne respectives d'éléments affectées aux une ou plusieurs troisièmes RAT respectives, et
dans lequel les premières tailles des premières sections affectées, les deuxièmes tailles des deuxièmes sections affectées et les troisièmes tailles des une ou plusieurs troisièmes sections affectées respectives sont adaptées pour être basées sur : l'une quelconque des premières exigences de couverture radio obtenues et la première charge de trafic de données, l'une quelconque des deuxièmes exigences de couverture radio et la deuxième charge de trafic de données obtenues, et chacun a obtenu l'une quelconque des troisièmes exigences de couverture radio et la troisième charge de trafic de données.

13. Nœud de réseau (110) selon la revendication 12, dans lequel un quelconque ou plusieurs parmi :
toutes les premières tailles des premières sections affectées respectives sont adaptées pour être les mêmes,
toutes les deuxièmes tailles des deuxièmes sections affectées respectives sont adaptées pour être les mêmes,
pour une troisième RAT spécifique parmi les une ou plusieurs troisièmes RAT, toutes les troisièmes tailles de l'une quelconque des troisièmes sections affectées sont adaptées pour être les mêmes.

14. Nœud de réseau (110) selon l'une quelconque des revendications 12-13, étant en outre configuré pour :
*obtenir* pour une quelconque ou plusieurs parmi la première RAT et la deuxième RAT et les une ou plusieurs troisièmes RAT, une quelconque ou plusieurs parmi : des données de mesure de couverture radio de la RAT correspondante et des données de mesure de charge de trafic de données d'UE (121, 122, 123) utilisant la RAT correspondante, et

15. Nœud de réseau (110) selon l'une quelconque des revendications 12-14, dans lequel un quelconque ou plusieurs parmi :
les distances entre des premières sections voisines sont adaptées pour être les mêmes,
les distances entre des deuxièmes sections voisines sont adaptées pour être les mêmes,
pour une troisième RAT spécifique parmi les une ou plusieurs troisièmes RAT, les distances entre des troisièmes sections voisines sont adaptées pour être les mêmes.

16. Nœud de réseau (110) selon les revendications 14 et 15, dans lequel le nœud de réseau (110) est en outre configuré pour ajuster les éléments d'antenne attribués sur la base des quelconques obtenues parmi des données de mesure de couverture radio de la RAT correspondante et des données de mesure charge de trafic d'UE (121, 122, 123) utilisant la RAT correspondante, en ajustant une quelconque ou plusieurs parmi :
les distances entre des premières sections voisines, les distances entre des deuxièmes sections voisines, pour une troisième RAT spécifique parmi les une ou plusieurs troisièmes RAT, les distances entre des troisièmes sections voisines.

17. Nœud de réseau (110) selon l'une quelconque des revendications 11-16, dans lequel l'entrelacement des premières sections d'éléments d'antenne affectées pour la première RAT avec les deuxièmes sections d'éléments d'antenne affectées pour la deuxième RAT est adapté pour être effectué dans n'importe quelle dimension et en série parmi :
- dans un ordre strict en affectant une première section, précédée d'une deuxième section, précédée d'une troisième section, précédée d'une première section supplémentaire, précédée d'une deuxième section supplémentaire, précédée d'une troisième section supplémentaire, etc., et
- pas dans un ordre strict.
